# EUROPÄISCHE PATENTSCHRIFT

(11) **EP 1 370 792 B1**
(45) Veröffentlichungstag und Bekanntmachung des Hinweises auf die Patenterteilung: **29.06.2005**
(21) Anmeldenummer: 02752877.7
(22) Anmeldetag: 11.03.2002
(51) Int. Cl.: F16L 33/02

(54) **SCHLAUCHKLEMME UND SCHLIESSWERKZEUG**
HOSE CLAMP AND CLOSING TOOL
PINCE POUR TUYAUX SOUPLES ET OUTIL DE FERMETURE

(30) Priorität: 20.03.2001 EP 01106955
(43) Veröffentlichungstag der Anmeldung: 17.12.2003
(73) Patentinhaber: Hans Oetiker AG Maschinen- und Apparatefabrik, 8812 Horgen (CH)
(72) Erfinder: OETIKER, Hans, CH-8812 Horgen (CH); MEIER, Ulrich, CH-8820 Wädenswil (CH)
(74) Vertreter: Strehl Schübel-Hopf & Partner
(86) Internationale Anmeldenummer: PCT/EP2002/002655
(87) Internationale Veröffentlichungsnummer: WO 2002/075199

(56) Entgegenhaltungen:
- EP-A- 0 122 329
- DE-C- 718 973
- US-A- 1 405 587
- US-A- 1 522 013
- US-A- 3 078 532
- US-A- 3 585 704
- US-A- 4 222 155

## Beschreibung

Aus US-A-4,312,101 ist eine Schlauchklemme bekannt, die nach Anlegen an die zu dichtende Schlauch/Rohrnippel-Verbindung durch Verformen eines in der Klemme vorgesehenen Ohrs verengt wird. Um zu verhindern, daß beim Verengen der Schlauch in das Ohr gelangt und dadurch von dem Rohrnippel abgehoben wird, ist für die bekannte Schlauchklemme eine Einlage aus Bandmaterial vorgesehen, die in die Schlauchklemme so eingebracht wird, daß sie den Spalt des Ohrs überbrückt.

Während für normale Schlauchklemmen, insbesondere solche der oben beschriebenen Art mit einem zu verengenden Ohr, ein gut verformbarer Stahl nach DIN 1.4301 mit einer typischen Dicke von 0,6 mm verwendet wird, werden Einlagen aus einem wesentlich dünneren Werkstoff gefertigt, typischerweise aus 0,2 bis 0,4 mm dickem Stahl nach DIN 1.4310, der hohe Federwirkung und hohe Steifigkeit aufweist, entsprechend schwer verformbar und daher für Ohrklemmen ungeeignet ist.

Eine Schlauchklemme nach dem Oberbegriff des Anspruchs 1 ist aus US-A-4 222 155 bekannt.

Der vorliegenden Erfindung liegt der Gedanke zugrunde, das für derartige Einlagen bei bekannten Schlauchklemmen übliche Bandmaterial selbst zur Herstellung von Schlauchklemmen heranzuziehen. Auf diese Weise wird das gleiche Ausgangsmaterial in zusätzlicher Weise genutzt, was zu einer Kostenersparnis führt. Dabei ist es grundsätzlich möglich, auch fertige Einlagen, die für die bekannten Schlauchklemmen bestimmt und auf die dafür vorgesehene Form zugeschnitten und verformt sind, zur Erzeugung erfindungsgemäßer Schlauchklemmen heranzuziehen.

Die im Anspruch 2 angegebene Gestaltung ist für die Steifigkeit der Schlauchklemme günstig. Die Querschnittsform gemäß Anspruch 3 oder 4 verleiht der Schlauchklemme eine Eigenvorspannung, die nicht nur zum Ausgleich von Toleranzen vorteilhaft ist, sondern auch gewährleistet, daß sich die Schlauchklemme nach dem Einhängen des Hakens in die Öffnung federnd an den Schlauch anlegt.

Die Maßnahme des Anspruchs 5 bewirkt, daß sich die Schlauchklemme leicht schließen läßt.

Die in Anspruch 6 und 7 angegebenen Gestaltungen ergeben eine Schlauchklemme mit niedrigem Profil ohne radial weit nach außen ragende Teile.

Ein typischer Anwendungsbereich der erfindungsgemäßen Schlauchklemme ist in Anspruch 8, angegeben.

Zum Schließen der erfindungsgemäßen Schlauchklemme eignet sich insbesondere das in Anspruch 9 angegebene zangenartige Werkzeug. Mit diesem läßt sich der Schließvorgang unter Einhängen des Hakens in die Öffnung durch eine einfache Zangenbewegung ausführen.

Die in den Ansprüchen 10 und 11 angegebenen Maßnahmen sind insofern zweckmäßig, als sie ein gleichmäßiges Schließen der Schlauchklemme zu einem Zylinderring gewährleisten.

In der Gestaltung des Werkzeugs nach den Ansprüchen 12 und 13 ist gewährleistet, daß die Schlauchklemme über ihren gesamten Umfang von dem Werkzeug erfaßt wird.

Die Merkmale der Ansprüche 14 und 15 sind insofern von Vorteil, als Verkantungen beim Schließen, die zu Abweichungen von der Zylinderform an der fertigen, geschlossenen Schlauchklemme führen können, mit Sicherheit vermieden werden.

Ein bevorzugtes Ausführungsbeispiel der Erfindung wird nachstehend anhand der Zeichnungen näher erläutert. Darin zeigt
Figur 1 eine Schlauchklemme im offenen Zustand,
Figur 2 die gleiche Schlauchklemme im geschlossenen Zustand,
Figur 3a bis 3c Querschnitte durch die Schlauchklemme,
Figur 4 ein geöffnetes Werkzeug mit eingelegter offener Schlauchklemme und
Figur 5 das gleiche Werkzeug im geschlossenen Zustand.

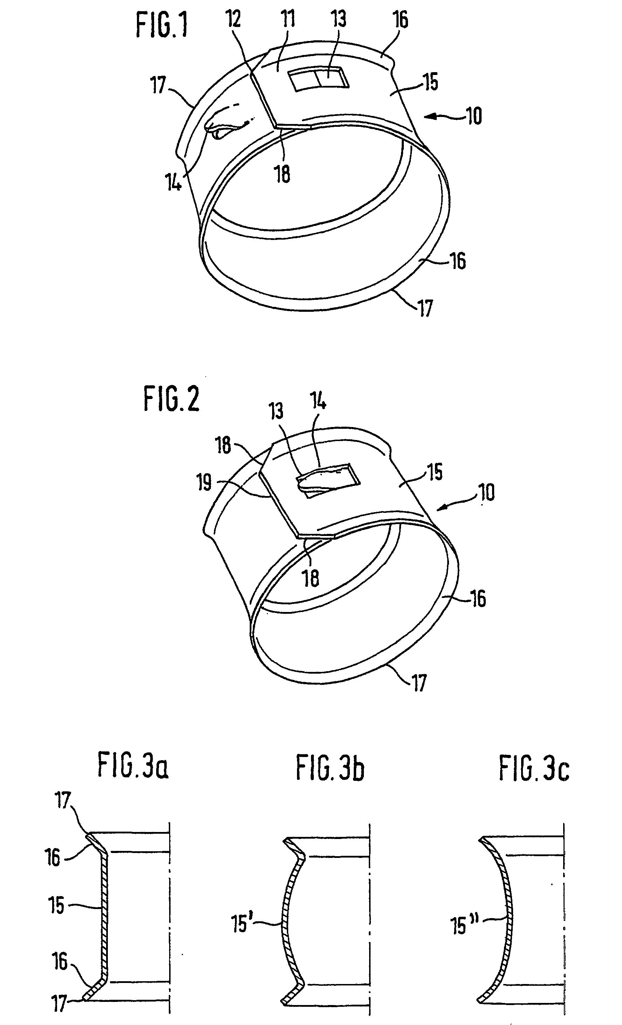

Gemäß Figur 1 besteht die Schlauchklemme aus einem offenen Bandring **10** aus Stahl nach DIN 1.4310, der so vorgebogen ist, daß die Bandenden **11, 12** einander überlappen. In dem außen überlappenden Bandende **11** ist eine rechteckige Öffnung **13** ausgestanzt, während im inneren Bandende **12** ein Haken **14** durch teilweises Ausstanzen und Herausdrücken aus dem Bandmaterial gebildet ist. Der in Figur 2 gezeigte geschlossene Zustand der Schlauchklemme wird dadurch gesichert, daß der Haken **14** in die Öffnung **13** eingreift.

Die Dicke des Bandmaterials beträgt höchstens 0,4 mm, vorzugsweise 0,3 mm; seine Breite liegt typischerweise zwischen 5 und 12 mm und beträgt vorzugsweise 8 mm. Ein derartiges Bandmaterial eignet sich insbesondere für Schlauchklemmen, die in dem in Figur 2 gezeigten geschlossenen Zustand einen Innendurchmesser bis 20 mm, vorzugsweise zwischen 3 und 13 mm, haben. Sofern geeignete Schließmittel (Zangen) zur Verfügung stehen, kann der größte Durchmesser über 20 mm liegen.

Wie Figur 1 und 2 ersichtlich, weist der Bandring **10** einen seine wesentliche Breite einnehmenden mittleren Bereich **15** und nach außen gebördelte Randbereiche **16** auf. Bei einer Gesamtbreite des Bandrings **10** von 8 mm beträgt die Breite jedes gebördelten Randbereichs **16** etwa 1 mm.

Das Maß, um das die Außenkanten **17** des Bandrings **10** über dessen mittleren Bereich **15** hinausragen, entspricht mindestens der Dicke des Bandmaterials.

Der Haken **14** ist an seinem offenen Ende aus dem Bandring **10** um ein Maß herausgebogen, das etwas größer ist als die Dicke des Bandmaterials. Dadurch ist eine sichere Verankerung des Hakens **14** an der entsprechenden Kante der Öffnung **13** im geschlossenen Zustand der Schlauchklemme gewährleistet.

Die nach außen gebördelten Randbereiche **16** dienen nicht nur dazu, die Steifigkeit des Bandrings **10** zu erhöhen. Sie bewirken auch, daß der Haken **14** im eingehängten Zustand nicht über das äußerste Profil des Bandrings **10** hinausragt, wodurch sich die Gefahr verringert, daß der Haken **14** versehentlich aus der Öffnung **13** gelöst wird und die Schlauchklemme aufgeht. Weiterhin dienen die gebördelten Randbereiche **16** der gegenseitigen Führung der beiden Bandenden, bis der Haken **14** in die Öffnung **15** einrastet. Schließlich sind die gebördelten Randbereiche **16** auch insofern von Vorteil, als scharfe Kanten, die sich in den zu dichtenden Schlauch einschneiden könnten, vermieden werden.

Das außen überlappende Bandende **11** ist, wie in Figur 1 und 2 gezeigt, an beiden Seiten bei **18** derart abgeschrägt, daß die Stirnkante **19** eine Länge hat, die im wesentlichen der Breite des mittleren Bereichs **15** des Bandrings **10** entspricht. Die Abschrägungen **18** dienen der besseren Führung und Zentrierung beim Biegen und Schließen der Schlauchklemme.

Der in Figur 1 und 2 gezeigte Bandring **10** hat den in Figur 3a dargestellten Querschnitt, bei dem der mittlere Bereich **15** zylindrisch ist. Gemäß Figur 3b und 3c kann der Bereich **15', 15"** jedoch auch mit einer nach außen konvexen oder konkaven Wölbung versehen sein, die dem Bandring **10** eine Elastizitätsreserve verleiht. Dadurch wird erreicht, daß sich die Schlauchklemme leichter schließen läßt und nach dem Einhaken elastisch an dem zu dichtenden Schlauch anliegt. Gleichzeitig ist sie toleranzfreundlicher.

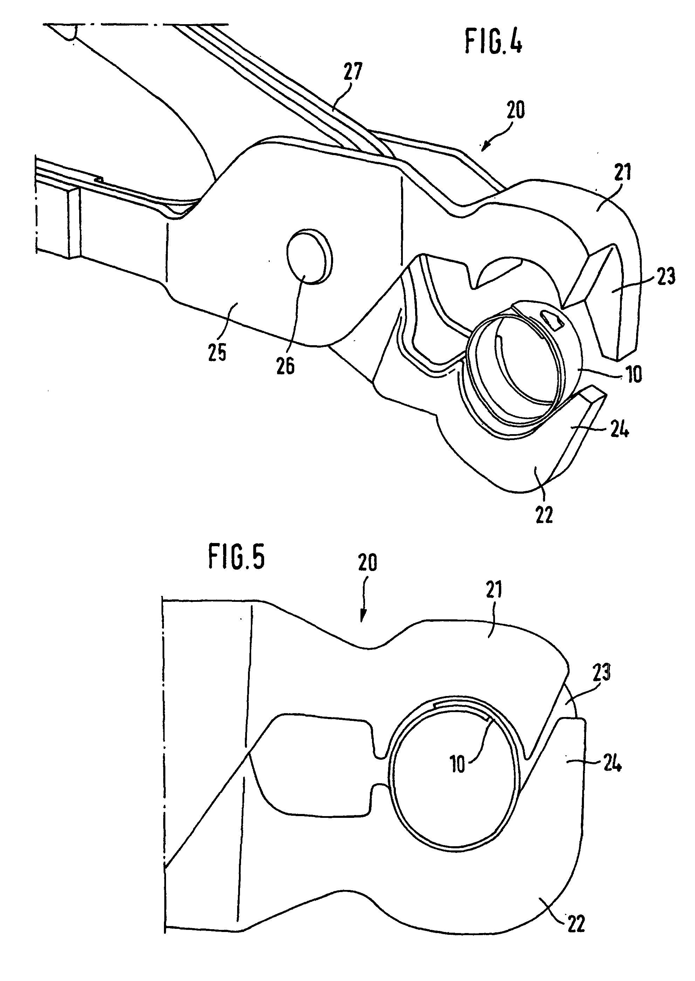

Das in Figur 4 und 5 dargestellte Werkzeug **20** zum Schließen der in Figur 1 und 2 dargestellten Schlauchklemme hat die Form einer Zange, deren Backen **21, 22** in dem in Figur 5 veranschaulichten geschlossenen Zustand eine praktisch ununterbrochene zylindrische Innenfläche mit einem dem Außendurchmesser der geschlossenen Klemme **10** entsprechenden Durchmesser bilden.

Im Querschnitt ist diese Innenfläche zur Außenfläche der Klemme **10** komplementär gestaltet; mit anderen Worten weisen die Innenflächen der Backen **21, 22** einen zylindrischen mittleren Bereich mit erweiterten Randbereichen auf. Diese komplementäre Gestaltung gewährleistet nicht nur, daß die Schlauchklemme **10** völlig geschlossen wird; sie bewirkt auch eine Zentrierung und Ausrichtung der Schlauchklemme **10** während des Schließvorgangs.

Die Spitzen **23, 24** der Backen **21, 22** sind gegenüber deren Hauptteilen auf die halbe Breite reduziert, so daß sie im geschlossenen Zustand einander übergreifen. Dadurch wird eine Unterbrechung in der die Schlauchklemme umgreifenden Zylinderfläche der Backen **21, 22** im geschlossenen Zustand des Werkzeugs **20** vermieden.

Der den Backen **21** tragende Zangenarm **25** ist im Bereich des Lagerbolzens **26** zweischenkelig gestaltet, wobei der den Backen **22** tragende Zangenarm **27** den Arm **25** zwischen dessen beiden Schenkeln kreuzt. Dadurch werden Verkantungen vermieden, so daß die Backen **21, 22** exakt zu der erwähnten Zylinderform schließen.

In einer in den Zeichnungen nicht dargestellten Variante können die Spitzen der Backen so gestaltet sein, daß der eine eine mittlere Zinke trägt, die im geschlossenen Zustand zwischen zwei am anderen Backen vorhandene äußere Zinken eingreift. Auch durch diese Gestaltung lassen sich Verkantungen vermeiden.

Um Schlauchklemmen unterschiedlicher Durchmesser mit derselben Zange zu schließen, können die Backen austauschbar gestaltet sein, wobei dann für die jeweilige Schlauchklemme das entsprechende Backenpaar eingesetzt wird. Eine Alternative besteht darin, die Backen mit prismatischen Innenflächen zu versehen.

Bei dem oben anhand von Figur 4 und 5 beschriebenen Ausführungsbeispiel handelt es sich um ein speziell zum Schließen der Schlauchklemme nach Figur 1 bis 3 gestaltetes Sonderwerkzeug. Für denselben Zweck lassen sich auch handelsübliche Rohrzangen mit anpaßbarem Durchmesser benutzen; beispielsweise in der Elektrobranche übliche Zangen mit austauschbaren, halbschalenförmigen Backen, die entsprechend dem Durchmesser der Schlauchklemme ausgewählt werden.

## Patentansprüche

1. Schlauchklemme aus einem offenen Bandring (**10**) mit überlappenden Bandenden (**11, 12**), einer im einen Bandende (**11**) angeordneten Öffnung (**13**) und einem im anderen Bandende (**12**) angeordneten Haken (**14**) zum Eingriff in die Öffnung (**13**), **dadurch gekennzeichnet, daß** der Bandring (**10**) aus dem bis zu 0,4 mm dicken Material einer aus Stahl nach DIN 1.4310 bestehenden Schlauchklemmeneinlage gefertigt ist und gegenüber seinem die wesentliche Bandbreite einnehmenden mittleren Bereich (**15**) nach außen gebördelte Randbereiche (**16**) aufweist.

2. Schlauchklemme nach Anspruch 1, wobei der Bandring (**10**) eine Dicke von 0,2 bis 0,3 mm hat.

3. Schlauchklemme nach Anspruch 1 oder 2, wobei der mittlere Bereich (**15**) des Bandrings (**10**) im Querschnitt gewölbt ist.

4. Schlauchklemme nach Anspruch 3, wobei der mittlere Bereich (**15**) des Bandrings (**10**) im Querschnitt nach außen konvex gewölbt ist.

5. Schlauchklemme nach einem der Ansprüche 3 bis 4, wobei das außen überlappende Bandende (**11**) an seiner Stirnkante (**19**) in den Bereichen der gebördelten Randbereiche (**16**) abgeschrägt (**18**) ist.

6. Schlauchklemme nach einem der vorhergehenden Ansprüche, wobei der Haken (**14**) aus dem Bandmaterial teilweise ausgestanzt und herausgedrückt ist.

7. Schlauchklemme nach Anspruch 6, wobei im geschlossenen Zustand der Haken (**14**) über den im Querschnitt ebenen Teil (**15**) des Bandrings (**10**) nicht weiter herausragt als die gebördelten Randbereiche (**16**).

8. Schlauchklemme nach einem der vorhergehenden Ansprüche mit einem Durchmesser bis zu 20 mm, vorzugsweise 3 bis 13 mm, wobei das Bandmaterial eine Breite von 5 bis 12 mm, vorzugsweise 8 mm, und eine Dicke von höchstens 0,4 mm, vorzugsweise 0,3 mm, hat.

9. Werkzeug zum Schließen einer Schlauchklemme, die aus einem offenen Bandring (**10**) mit überlappenden Enden, einer im einen Bandende (**11**) angeordneten Öffnung (**13**) und einem im anderen Bandende (**12**) angeordneten Haken (**14**) zum Eingriff in die Öffnung (**13**) besteht, insbesondere zum Schließen einer Schlauchklemme nach einem der vorhergehenden Ansprüche, **dadurch gekennzeichnet, daß** das Werkzeug (**20**) als Zange gestaltet ist, deren beide Backen (**21**, **22**) im geschlossenen Zustand eine Innenfläche mit einem dem Außendurchmesser der geschlossenen Schlauchklemme entsprechenden Durchmesser bilden, wobei die Innenflächen der Backen (**21, 22**) eine über ihre wesentliche Breite glatte Zylinderfläche mit erweiterten Randbereichen bilden.

10. Werkzeug nach Anspruch 9, wobei die Backen (**21**, **22**) im geschlossenen Zustand eine im wesentlichen ununterbrochene Innenfläche bilden.

11. Werkzeug nach Anspruch 9 oder 10, wobei die Backen entsprechend dem Durchmesser der jeweiligen Schlauchklemme austauschbar sind.

12. Werkzeug nach einem der Ansprüche 9 bis 11, wobei die Spitzen (**23**, **24**) der Backen (**21**, **22**) im geschlossenen Zustand einander übergreifen.

13. Werkzeug nach Anspruch 12, wobei die Spitzen (**23, 24**) der Backen (**21**, **22**) auf im wesentlichen die halbe Breite reduziert sind.

14. , Werkzeug nach einem der Ansprüche 9 bis 12, wobei im Scharnierbereich (**26**) der eine Zangenarm (**25**) zweischenkelig ausgebildet ist und von dem anderen Zangenarm (**27**) zwischen den beiden Schenkeln durchkreuzt wird.

15. Werkzeug nach Anspruch 14, wobei die Spitze eines Backens zwei äußere Zinken aufweist, zwischen die im geschlossenen Zustand der Zange eine an der Spitze des anderen Backens ausgebildete Mittelzinke eingreift.

## Claims

1. A hose clamp made of an open band ring **(10)** and having overlapping band ends **(11, 12),** an opening **(13)** disposed in one band end **(11),** and a hook (14) disposed in the other band end **(12)** for engaging the opening **(13), characterised in that** the band ring **(10)** is made of the material of a hose clamp insert that is made of steel according to DIN 1.4310 with a thickness of up to 0.4 mm, and has border regions **(16)** raised outward from a centre portion **(15)** that takes a substantial part of the band width.

2. The hose clamp of claim 1 wherein the band ring **(10)** has a thickness of 0.2 to 0.3 mm.

3. The hose clamp of claim 1 wherein the centre portion **(15)** of the band ring **(10)** has a curved cross-section.

4. The hose clamp of claim 3 wherein the centre portion **(15)** of the band ring **(10)** has an outward convexly curved cross-section.

5. The hose clamp of claims 3 or 4 wherein the outer overlapping band end **(11)** has its terminal edge (**19**) chamfered in the areas of the raised border regions (**16**).

6. The hose clamp of any preceding claim wherein the hook **(14)** is partially punched and pressed out of the band material.

7. The hose clamp of claim 6 wherein the hook **(14)** in the closed condition projects beyond the portion **(15)** of plane cross-section of the band ring **(10)** not further than the outward raised border regions (**16**).

8. The hose clamp of any preceding claim, having a diameter of up to 20 mm, preferably 3 to 13 mm, wherein the band material has a width of 5 to 12 mm, preferably 8 mm, and a thickness of at most 0.4 mm, preferably 0.3 mm.

9. A tool for closing a hose clamp which consists of an open band ring (**10**) having overlapping ends, an opening (**13**) located in one band end (**11**) and a hook (**14**) located in the other band end (**12**) for engaging the opening (**13**), specifically for closing the hose clamp of any preceding claim, **characterised in that** the tool **(20)** is formed as a pair grippers the two jaws **(21, 22)** of which in their closed condition form an inner surface having a diameter corresponding to the outer diameter of the closed hose clamp, wherein the inner surfaces of the jaws **(21, 22)** form a smooth cylindrical surface over their substantial width with enlarged border regions.

10. The tool of claim 9 wherein the jaws (**21**, **22**) in the closed condition form a substantially uninterrupted inner surface.

11. The tool of claim 9 or claim 10 wherein the jaws are exchangeable in accordance with the diameter of the respective hose clamp.

12. The tool of any one of claims 9 to 11 wherein the tips **(23, 24)** of the jaws **(21, 22)** overlap each other in the closed condition.

13. The tool of claim 12 wherein the tips **(23, 24)** of the jaws **(21, 22)** have their widths reduced to substantially one-half.

14. The tool of any one of claims 9 to 12 wherein, in the hinge region **(26),** one gripper arm **(25)** is formed by two legs, with the other gripper arm **(27)** crossing between the two legs.

15. The tool of claim 14 wherein the tip of one jaw has two outer tines between which a central tine formed at the tip of the other jaw engages in the closed condition of the grippers.

## Revendications

1. Collier de serrage pour tuyau constitué d'une bande annulaire (10) ouverte avec des extrémités de bande (11, 12) se chevauchant, une ouverture (13) pratiquée dans une extrémité de bande (11) et un crochet (14) disposé dans l'autre extrémité de bande (12) pour s'engager dans l'ouverture (13), **caractérisé en ce que** la bande annulaire (10) est fabriquée dans le matériau d'une épaisseur allant jusqu'à 0,4 mm d'une garniture de collier de serrage en acier selon DIN 1.4310, et présente des zones de bordure (16) repliées vers l'extérieur par rapport à sa zone centrale (15) qui occupe l'essentiel de la largeur de la bande.

2. Collier de serrage selon la revendication 1, dans lequel la bande annulaire (10) présente une épaisseur de 0,2 à 0,3 mm.

3. Collier de serrage selon la revendication 1 ou 2, dans lequel la zone centrale (15) de la bande annulaire (10) est bombée dans sa section transversale.

4. Collier de serrage selon la revendication 3, dans lequel la zone centrale (15) de la bande annulaire (10) présente une section centrale convexe vers l'extérieur.

5. Collier de serrage selon l'une des revendications 3 ou 4, dans lequel l'extrémité de bande (11) extérieure de chevauchement est biseautée (18) sur son bord frontal (19), au voisinage des zones de bordure (16) repliées.

6. Collier de serrage selon l'une des revendications précédentes, dans lequel le crochet (14) est en partie estampé et repoussé dans le matériau de la bande.

7. Collier de serrage selon la revendication 6, dans lequel, à l'état fermé, le crochet (14) ne dépasse pas plus que les zones de bordure (16) repliées de la partie (15), de section transversale plane, de la bande annulaire (10).

8. Collier de serrage selon l'une des revendications précédentes d'un diamètre allant jusqu'à 20 mm, de préférence de 3 à 13 mm, dans lequel le matériau de la bande présente une largeur de 5 à 12 mm, de préférence de 8 mm, et une épaisseur maximale de 0,4 mm, de préférence de 0,3 mm.

9. Outil de fermeture d'un collier de serrage qui est constitué d'une bande annulaire (10) ouverte avec extrémités se chevauchant avec une ouverture (13) pratiquée dans une extrémité de bande (11) et un crochet (14) disposé dans l'autre extrémité de bande (12) pour s'engager dans l'ouverture (13), en particulier pour fermer un collier de serrage pour tuyau selon l'une des revendications précédentes, **caractérisé en ce que** l'outil (20) est conçu comme pince dont les deux mâchoires (21, 22) forment, à l'état fermé, une surface intérieure avec un diamètre correspondant au diamètre extérieur du collier de serrage fermé, les surfaces intérieures des mâchoires (21, 22) formant une surface cylindrique lisse sur l'essentiel de sa largeur, avec des zones de bordure élargies.

10. Outil selon la revendication 9, dans lequel les mâchoires (21, 22) forment, à l'état fermé, une surface intérieure sensiblement continue.

11. Outil selon la revendication 9 ou 10, dans lequel les mâchoires peuvent être échangées en fonction du diamètre du collier de serrage considéré.

12. Outil selon l'une des revendications 9 à 11, dans lequel les pointes (23, 24) des mâchoires (21, 22) passent l'une sur l'autre à l'état fermé.

13. Outil selon la revendication 12, dans lequel les pointes (23, 24) des mâchoires (21, 22) sont réduites à sensiblement la moitié de la largeur.

14. Outil selon l'une des revendications 9 à 12, dans lequel, dans la zone de charnière (26), un bras de pince (25) est réalisé avec deux branches et est croisé par l'autre bras de pince (27) entre les deux branches.

15. Outil selon la revendication 14, dans lequel la pointe d'une mâchoire comporte deux dents extérieures entre lesquelles, à l'état fermé de la pince, s'engage une dent centrale réalisée sur la pointe de l'autre mâchoire.
